# EUROPEAN PATENT SPECIFICATION

(11) **EP 2 556 994 B1**
(45) Date of publication and mention of the grant of the patent: **02.11.2016**
(21) Application number: 11177517.7
(22) Date of filing: 12.08.2011
(51) Int. Cl.: B60P 7/08

(54) **Strap-Tensioning Apparatus**
Riemenspannvorrichtung
Appareil de tendeur de sangle

(43) Date of publication of application: 13.02.2013
(73) Proprietor: Huang, Han-Ching, Situn, Taichung City 407 (TW)
(72) Inventor: Huang, Han-Ching, Situn, Taichung City 407 (TW)
(74) Representative: Lang, Christian

(56) References cited:
- DE-A1-102007 020 856
- US-A1- 2011 179 609

## Description

### BACKGROUND OF INVENTION

### 1. FIELD OF INVENTION

The present invention relates to a strap-tensioning apparatus for tying down cargo on a vehicle and, more particularly, to a strap-tensioning apparatus capable of avoiding excessively fast withdrawal of a strap.

### 2 RELATED PRIOR ART

Referring to FIGS. 1 through 3, a conventional strap-tensioning apparatus, which is e.g. disclosed by DE 10 2007 020 856 A1, includes a base 10, a handle 11, a reel 12, an axle 13 for connecting the handle 11 and the reel 12 to the base 10, and a rod 14 secured to the base 10. A short strap 15 is tied to the rod 14. A long strap 20 is wound on the reel 12. The reel 12 is formed with two ratcheted wheels 17. A suppressor 16 is elastically supported on the base 10 and in elastic contact with the ratcheted wheels 17. The base 10 is formed with two bosses 18. The handle 11 includes an opening 22 defined therein and two cams formed thereon. A detent 19 is elastically connected to the handle 11 while another detent 23 is elastically supported on the base 10.

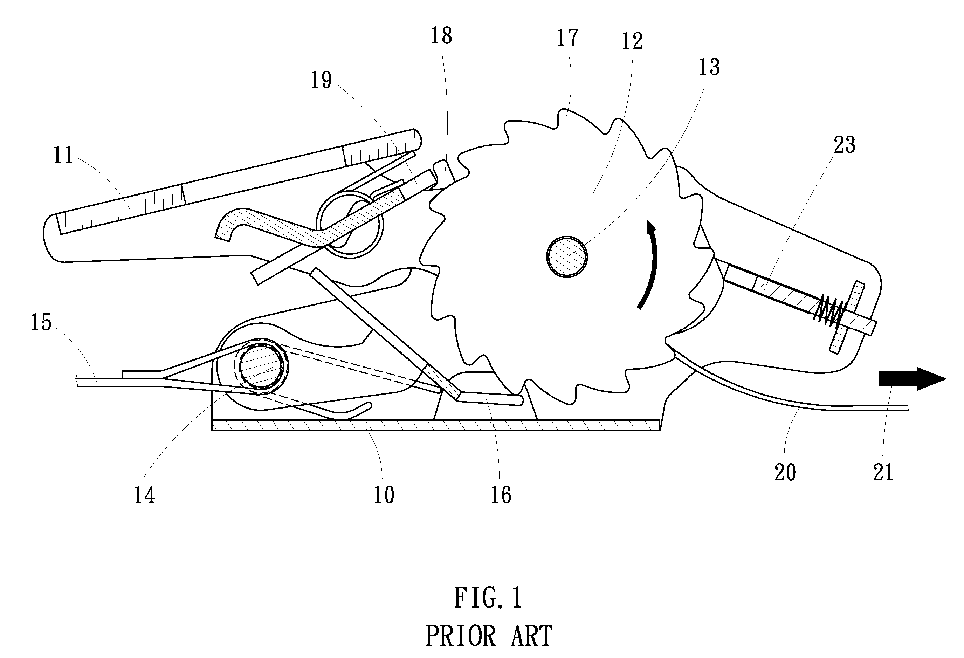

As shown in FIG. 1, the handle 11 is pivoted to a releasing position relative to the base 10. The detent 19 is kept away from the ratcheted wheels 17 of the reel 12 by the bosses 18. The detent 23 is kept away from the ratcheted wheels 17 of the reel 12 by the cams of the handle 11. The suppressor 16 is in elastic contact with the ratcheted wheels 17. The reeling in of the long strap 20 is avoided. However, the long strap 20 can be manually reeled out as indicated by an arrow head 21. During the reeling of the long strap 20, the ratcheted wheels 17 hit the suppressor 16 and make click sounds.

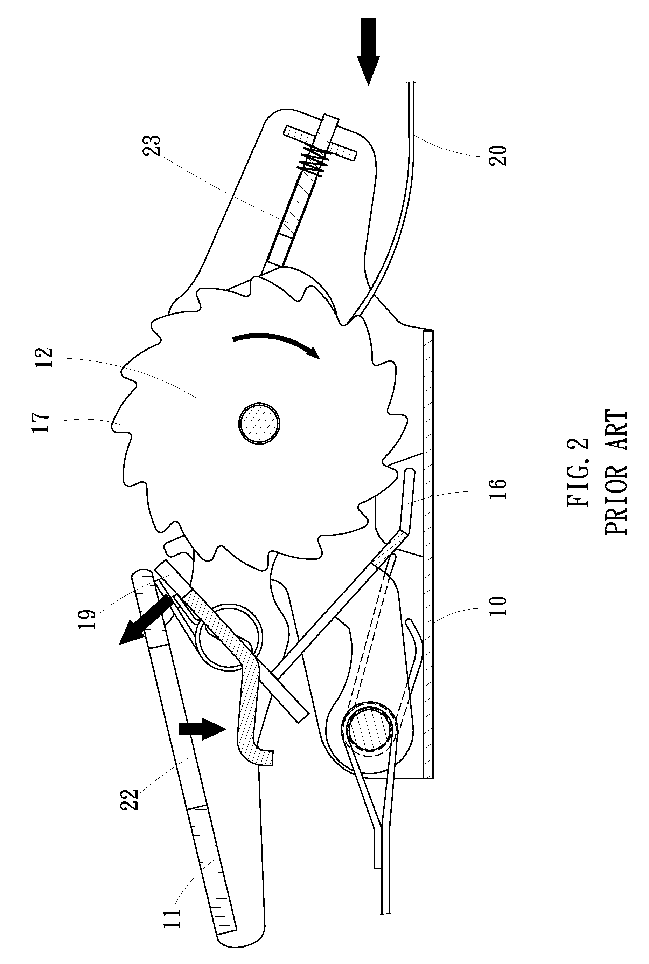

As shown in FIG. 2, the detent 19 is pressed down by a finger or a tool inserted through the opening 22. An end of the suppressor 16 is moved by the detent 19 while another end of the suppressor 16 is removed from the ratcheted wheels 17. Hence, the reel 12 is free for spinning. Accordingly, the long strap 20 can be reeled in as indicated by an arrow head.

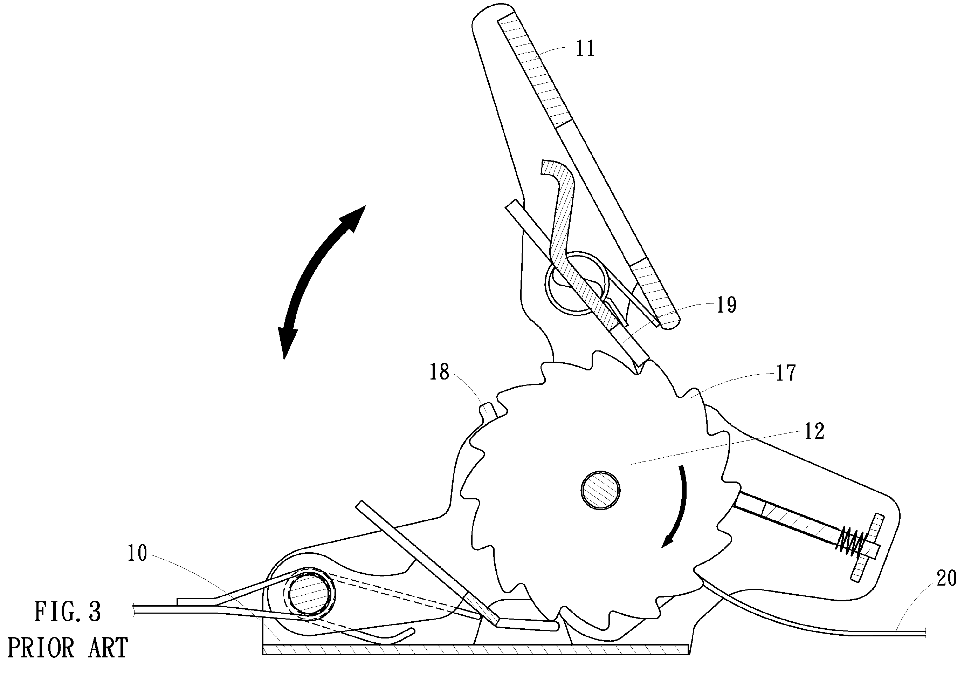

As shown in FIG 3, the handle 11 is manually pivoted to and fro to reel in the long strap 20. As the handle 11 is pivoted clockwise, the detent 19 engages with and spins the ratcheted wheels 17 while the detent 23 rattles and slides on the ratcheted wheels 17 so that the long strap 20 is reeled in. As the handle 11 is pivoted counterclockwise, the detent 19 rattles and slides on the ratcheted wheels 17 while the detent 23 engages with and bosses 18 the ratcheted wheels 17 so that the long strap 20 is not reeled out.

The long strap 20 can be automatically reeled in as shown in FIG. 2. The automatic reeling in of the long strap 20 could be excessively fast so that the long strap 20 could be turned into a whip that could hurt people. The situation could be worse since the free end of the long strap 20 is often connected to a hook that would cause more damages.

A further conventional strap-tightening apparatus is disclosed by US 2011/179609 A1. However, also said strap-tightening apparatus, the structure of which is similar to that of the device presented with respect to Figs. 1 to 3, does not allow the strap to be reeled in slowly.

The present invention is therefore intended to obviate or at least alleviate the problems encountered in prior art.

### SUMMARY OF INVENTION

It is the primary objective of the present invention to provide a strap-tensioning apparatus capable of avoiding excessively fast withdrawal of a strap.

The above mentioned object is solved by the strap-tensioning apparatus according to claim 1. Advantageous improvements of the invention are described by dependent claims.

To achieve the foregoing objective, the strap-tensioning apparatus includes a base, a spring-loaded reel, a spring-loaded detent, a handle and a spring-loaded detent/suppressor. The base includes two walls each formed with a first arched edge and a second arched edge. A short strap is tied to the base. The spring-loaded reel is supported on the base. The long strap is wound around the reel. The spring-loaded detent is movably supported on the walls for engagement with the reel. The handle is supported on the base. The handle includes two cams formed thereon and an opening defined therein. Each of the cams includes a lobe for pushing the spring-loaded detent from the reel. The spring-loaded detent/suppressor is movably supported on the handle for engagement with the reel. The handle can be pivoted to and fro to spin the reel to reel in the long strap when the detent/suppressor is supported on the second arched edges of the walls. The detent/suppressor suppresses the reel when it is retained in position on the first arched edges of the walls but allows the reel to spin when it is moved on the first arched edges of the walls from a first position to a second position. The detent/suppressor can be pushed via the opening and disengaged from the reel when it is located in the second position on the first arched edges of the walls.

Other objectives, advantages and features of the present invention will be apparent from the following description referring to the attached drawings.

### BRIEF DESCRIPTION OF DRAWINGS

The present invention will be described through detailed illustration of two embodiments versus the prior art referring to the drawings wherein:
FIG. 1 is a cross-sectional view of a conventional strap-tensioning apparatus;
FIG. 2 is a cross-sectional view of the conventional strap-tensioning apparatus in another position than shown in FIG. 1;
FIG. 3 is a cross-sectional view of the conventional strap-tensioning apparatus in another position than shown in FIG. 2;
FIG. 4 is a perspective view of a strap-tensioning apparatus according to the first embodiment of the present invention;
FIG. 5 is a cross-sectional view of the strap-tensioning apparatus shown in FIG. 4;
FIG. 6 is a cross-sectional view of the strap-tensioning apparatus in another position than shown in FIG. 5;
FIG. 7 is a partial, cross-sectional view of the strap-tensioning apparatus shown in FIG. 6;
FIG. 8 is a partial, cross-sectional view of the strap-tensioning apparatus in another position than shown in FIG. 7;
FIG. 9 is a partial, cross-sectional view of the strap-tensioning apparatus in another position than shown in FIG. 8;
FIG. 10 is a cross-sectional view of the strap-tensioning apparatus in another position than shown in FIG. 9;
FIG. 11 is a cross-sectional view of the strap-tensioning apparatus in another position than shown in FIGS. 5 and 6;
FIG. 12 is a cross-sectional view of the strap-tensioning apparatus in another position than shown in FIG. 11;
FIG. 13 is a partial, cross-sectional view of a strap-tensioning apparatus according to the second embodiment of the present invention;
FIG. 14 is a partial, cross-sectional view of the strap-tensioning apparatus in another position than shown in FIG. 13; and
FIG. 15 is a partial, cross-sectional view of the strap-tensioning apparatus in another position than shown in FIG. 14.

### DETAILED DESCRIPTION OF EMBODIMENTS

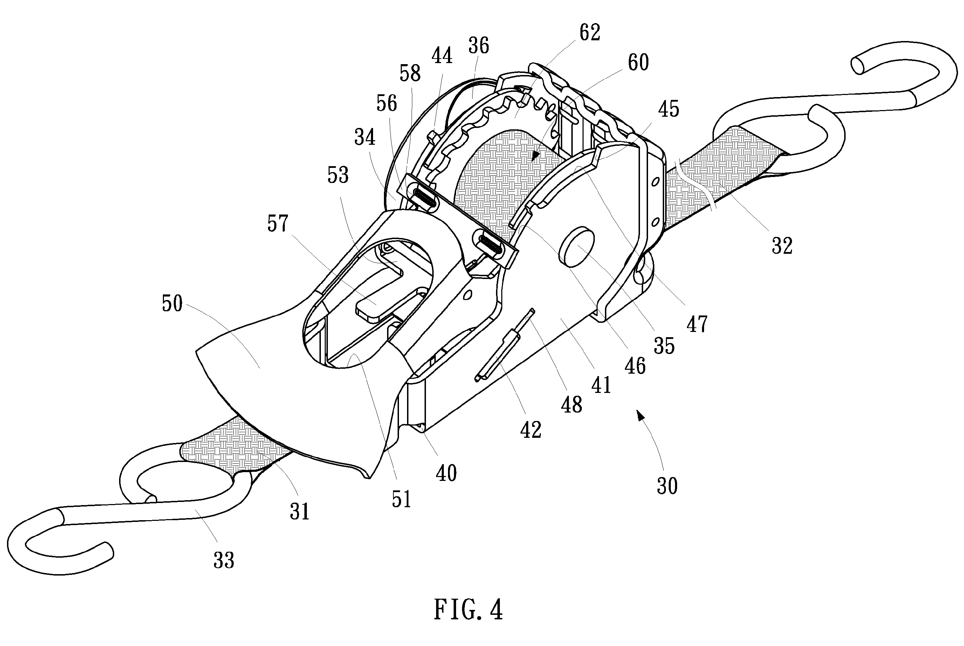

Referring to FIGS. 4 through 12, there is shown a strap-tensioning apparatus 30 for tensioning a short strap 31 and a long strap 32 for fastening cargo on a vehicle in accordance with a first embodiment of the present invention. The strap-tensioning apparatus 30 includes a base 40, a handle 50 and a reel 60.

The short strap 31 includes two loops each formed at an end. A hook 33 is tied to the first loop of the short strap 31. The long strap 32 includes two loops each formed at an end. Another hook 33 is tied to the first loop of the long strap 32.

The base 40 includes two parallel walls 41 extending thereon and a rod 43 extending between the walls 41. Each of the walls 41 includes a boss 44 formed thereon, a stop 45 formed thereon, a first arched edge 46 formed thereon between the boss 44 and the stop 45, a second arched edge 47 formed thereon near the boss 44, and a slot 48 defined therein. The arched edges 46 and 47 are concave in comparison with the boss 44 and the stop 45.

The strap-tensioning apparatus 30 further includes a detent 42 that is preferably loaded by a compression spring. The detent 42 includes two lateral portions each movably inserted in the slot 48 defined in a relative one of the walls 41.

The handle 50 includes two parallel cams 52 formed thereon and an opening 51 defined therein between the cams 52. Each of the cams 52 includes a lobe 54 formed thereon and a stop 55 formed thereon next to the lobe 54.

The strap-tensioning apparatus 30 further includes a detent/suppressor 53 that is preferably loaded by a torque spring. The detent/suppressor 53 is a T-shaped element formed with a head 56 that extends transversely and a tail 57 that extends longitudinally. The head 56 includes two lateral portions that extend beyond the tail 57. Each of the lateral portions of the head 56 is movably supported on a related one of the walls 41. The detent/suppressor 53 further includes two ribs 58 each extending from a related one of the lateral portions of the head 56. The detent/suppressor 53 is loaded by a torque spring preferably.

The reel 60 includes a tube 61 and two ratcheted wheels 62 formed on the tube 61. The tube 61 includes a slit defined therein. Each of the ratcheted wheels 62 includes an aperture 63 centrally defined therein and ratchets 64 formed thereon. Each of the ratchets 64 includes a radial edge 65 and an inclined edge 66.

In assembly, the ratcheted wheels 62 are located between the lobes 54 that are located between the walls 41. An end of the tube 61 is inserted through one of the lobes 54 and one of the walls 41. The second loop of the long strap 32 is inserted in the tube 61 through the slit. An axle 35 is inserted through the tube 61, the ratcheted wheels 62, the lobes 54, the walls 41 and the second loop of the long strap 32. Each end of the axle 35 is connected to a related ratcheted wheel 62 so that the axle 35 can only be spun together with the reel 60. The long strap 32 is tied to the axle 35. The tube 61 is rotationally supported on the walls 41. The rod 43 is inserted through the second loop of the short strap 31 so that the short strap 31 is tied to the rod 43. A coil spring 36 is located in a shell 34 attached to the wall 41. An end of the coil spring 36 is connected to the axle 35 and another end of the coil spring 36 is connected to the shell 34.

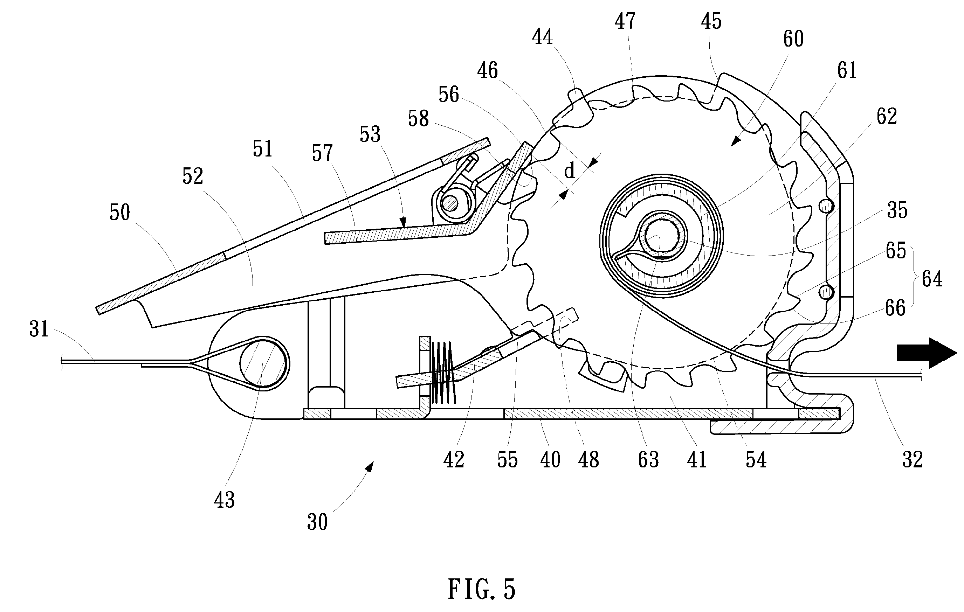

Referring to FIG. 5, the handle 50 is pivoted to a position where the lateral portions of the head 56 of the detent/suppressor 53 are located on the first arched edges 46 of the walls 41 of the base 40 while the head 56 is located away from the bosses 44. Each rib 58 is in elastic contact with the inclined edge 66 of a ratchet 64 of the related ratcheted wheel 62 as the coil spring 36 tends to cause the reel 60 to reel in the long strap 32. The detent 42 is kept away from the ratchets 64 by the lobes 54. As indicated by an arrow head, the long strap 32 can manually be reeled out as the radial edges 65 of the ratchets 64 can be moved past the ribs 58. Accordingly, the coil spring 36 is further loaded. The more the long strap 32 is reeled out, the more the coil spring 36 is loaded.

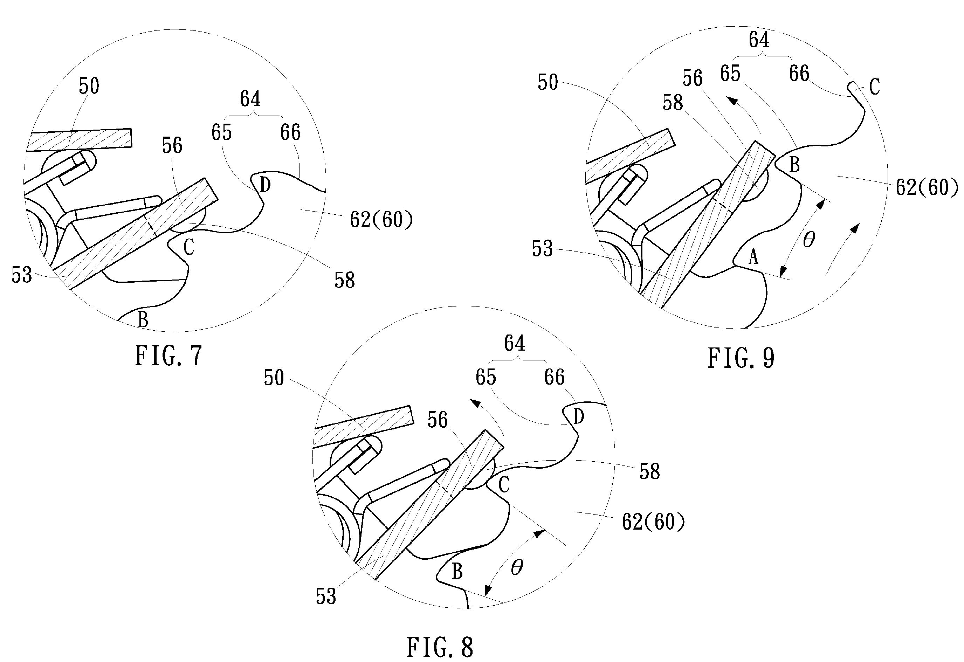

If the long strap 32 is released accidentally, the coil spring 36 tends to reel in the long strap 32. In fact, the coil spring 36 can reel in the long strap 32 for a short distance d corresponding to an angle smaller than the angle θ between two adjacent ratchets 64 as shown in FIGS. 8 and 9. That is, the coil spring 36 can accelerate the ratcheted wheels 62 to a limited extent. The resultant angular momentum of the ratcheted wheels 62 however cannot overcome the resistance from the detent/suppressor 53. Therefore, the reeling in of the long strap 32 is stopped.

The manual reeling out of the long strap 32 has been described referring to FIG. 5. It should be noted that the long strap 32 could not be wound onto the reel 60 by the coil spring 36 automatically should the long strap 32 be released accidentally. Therefore, the long strap 32 would not hurt anybody or damage anything.

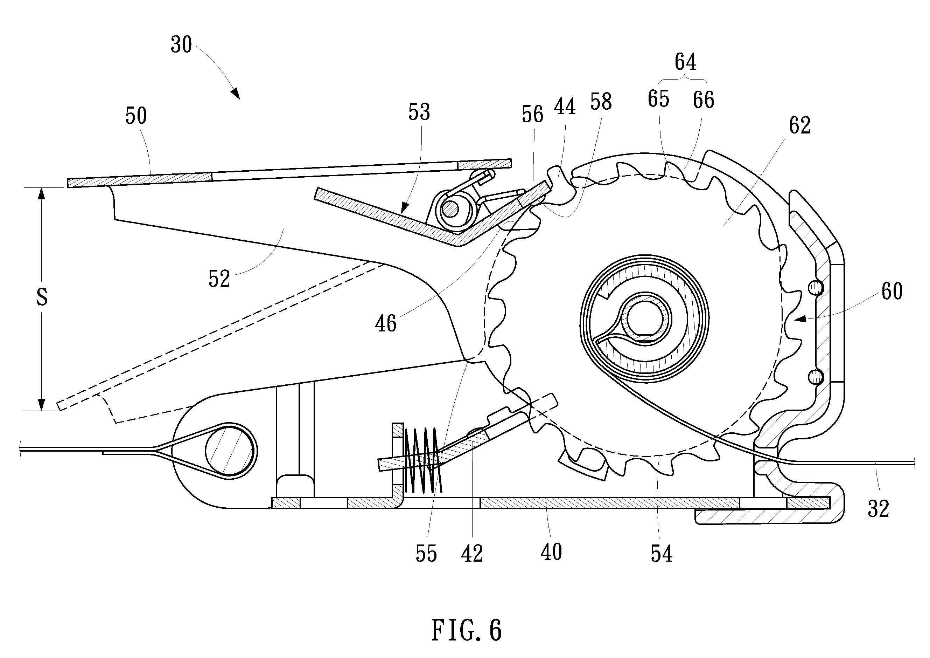

Referring to FIG. 6, the handle 50 is pivoted to a position where the lateral portions of the head 56 of the detent/suppressor 53 are located on the first arched edges 46 of the walls 41 of the base 40 while the head 56 is located against the bosses 44. Each rib 58 is in elastic contact with the inclined edge 66 of a ratchet 64 of a related ratcheted wheel 62. The detent 42 is in elastic contact with the inclined edge 66 of a ratchet 64 of each ratcheted wheel 62 as the coil spring 36 tends to cause the reel 60 to reel in the long strap 32. The long strap 32 is not supposed to be reeled out as the radial edges 65 of the ratchets 64 are abutted against the detents 42.

If the long strap 32 is released accidentally, the coil spring 36 tends to reel in the long strap 32. The force exerted by the coil spring 36 however cannot overcome the resistance from the detent/suppressor 53 plus the resistance from the detent 42. Therefore, the reeling in of the long strap 32 is avoided.

Referring to FIGS. 7 through 9, the winding of the long strap 32 onto the reel 60 by the coil spring 36 will be described. To this end, four ratchets 64 of a ratcheted wheel 62 are represented by "A", "B", "C" and "D."

Referring to FIG. 7, the related rib 58 is in elastic contact with the inclined edge 66 of the ratchet C as the handle 50 is located in the position shown in FIG. 6. The long strap 32 is retained still.

Referring to FIG. 8, the rib 58 is moved to the crown of the ratchet C along the inclined edge 66 of the ratchet C as the handle 50 is moved to a position between the positions shown in FIGS. 6 and 5. The rib 58 does not provide an adequate force to spin the ratcheted wheel 62 by the ratchet C although it is in contact with the ratchet C.

Referring to FIG. 9, the rib 58 is moved past the crown of the ratchet C as the handle 50 is moved to the position shown in FIG. 5. Now, all of the ratchets 64 are kept away from the detent 42. Hence, there is nothing to prevent the reel 60 from spinning and reeling in the long strap 32. The coil spring 36 makes the reel 60 reel in the long strap 32 for a distance corresponding to the angle θ between two adjacent ratchets 64 such as the ratchets C and B.

If the coil spring 36 is adequately loaded, it can accelerate the reel 60 by an adequate value so that the resultant angular momentum of the reel 60 is adequate to overcome the resistance from the detent/suppressor 53. Hence, the ratchet B moves past the rib 58 to allow the coil spring 36 to make the reel 60 reel in the long strap 32 for another distance corresponding to the angle θ. Synchronously, the energy loaded in the coil spring 36 is reduced.

If the coil spring 36 is still adequately loaded, it can accelerate the reel 60 by an adequate value so that the resultant angular momentum of the reel 60 is adequate to overcome the resistance from the detent/suppressor 53. Hence, the ratchet A moves past the rib 58 to allow the coil spring 36 to make the reel 60 reel in the long strap 32 for another distance corresponding to the angle θ. Synchronously, the energy loaded in the coil spring 36 is reduced.

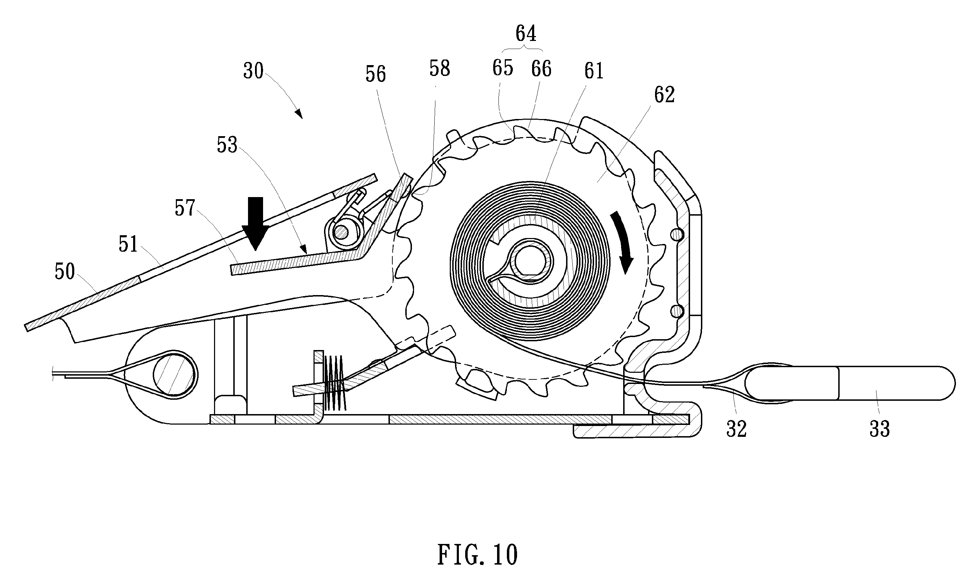

The coil spring 36 continues to reel the long strap 32 onto the reel 60 until the energy left therein is too little to accelerate the reel 60 by an adequate value to give an adequate angular momentum to the reel 60 to overcome the resistance from the detent/suppressor 53. In that case, the coil spring 36 stops winding the long strap 32 onto the reel 60, and the hook 33 tied to the long strap 32 will not travel much further to hurt anyone or damage anything near the strap-tensioning apparatus 30. Accordingly, there is only a short final section of the long strap 32 left unwound on the reel 60. The final section of the long strap 32 can be manually wound onto the reel 60. Alternatively, the final section of the long strap 32 can be wound onto the reel 60 by the coil spring 36 as described referring to FIG. 10.

Referring to FIG. 10, the tail 57 of the detent/suppressor 53 is manually pressed through the opening 51 defined in the handle 50. The ribs 58 are removed from the ratchets 64 of the ratcheted wheels 62. Now, there is nothing to prevent the reel 60 from spinning and winding the final section of the long strap 32 onto the reel 60.

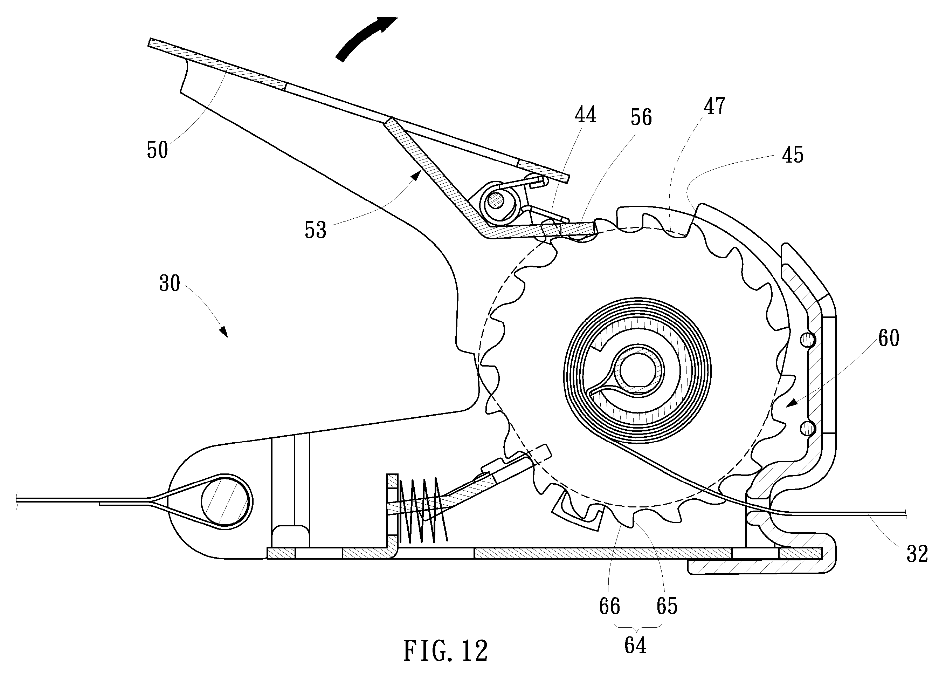

Access to the tail 57 is allowed by the opening 51. Thus, the tail 57 can be pushed so that the head 56 is lifted. Then, the head 56 can be moved over the bosses 44. Therefore, the head 56 can be moved from the first arched edges 46 of the walls 41 to the second arched edges 47, and vice versa. In other words, the handle 50 can be moved between the position shown in FIG. 6 and the position shown in FIG. 12.

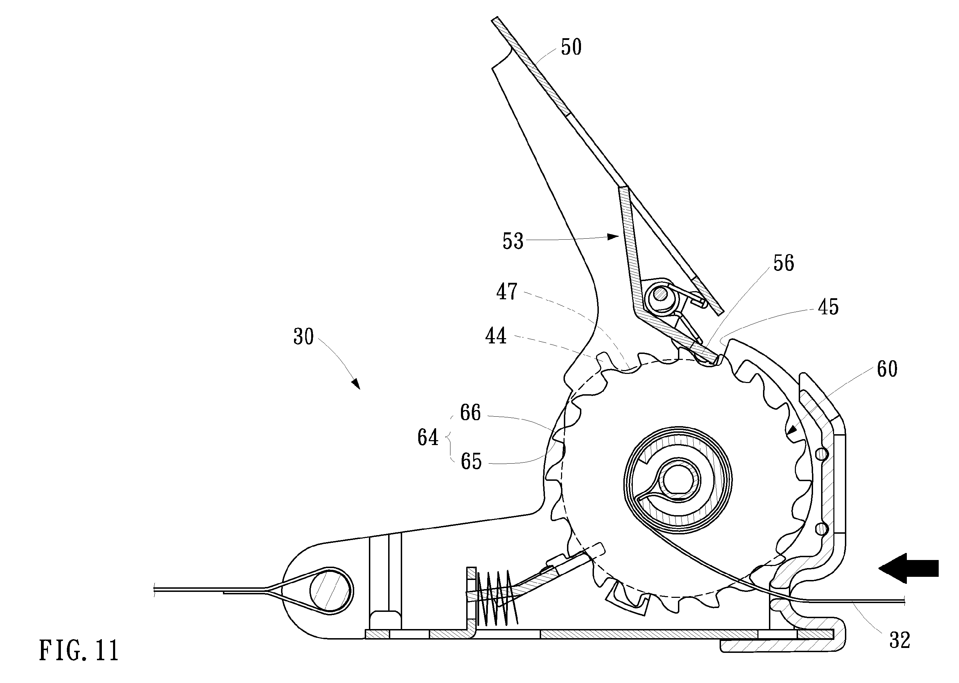

Referring to FIGS. 11 and 12, the handle 50 is in a manual reeling-in mode. The lateral portions of the head 56 of the detent/suppressor 53 are movably located on the second arched edges 47 of the walls 41. The detent/suppressor 53 and the detent 42 can alternately be engaged with the ratchets 64. Hence, handle 50 can be pivoted manually to and fro to reel the long strap 32 onto the reel 60.

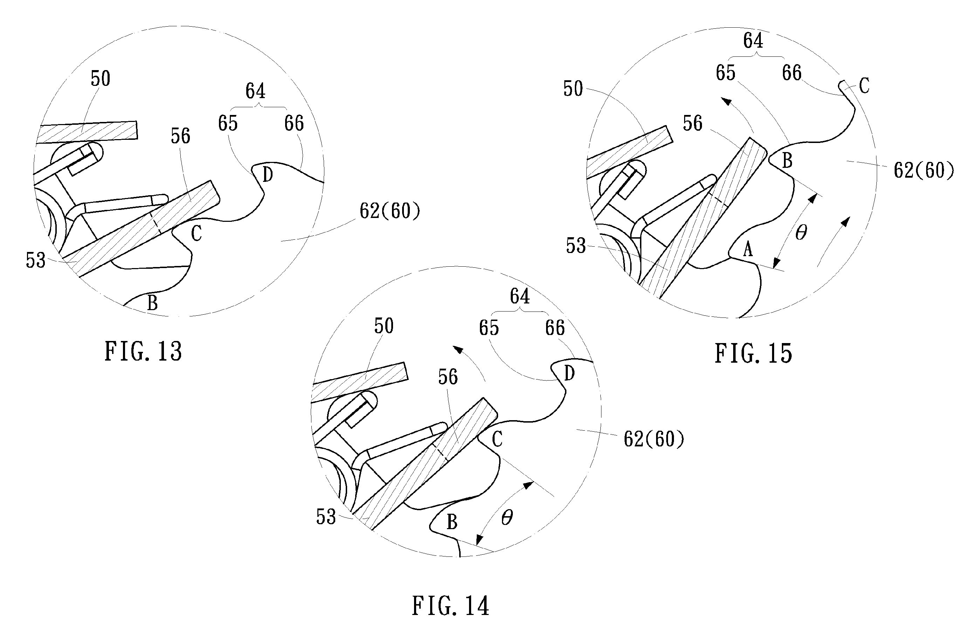

Referring to FIGS. 13 to 15, there is shown a strap-tensioning apparatus according to a second embodiment of the present invention. The second embodiment is like the first embodiment except that the detent/suppressor 53 does not include the ribs 58.

The present invention has been described via the detailed illustration of two embodiments. Those skilled in the art can derive variations from the embodiments without departing from the scope of the present invention. Therefore, the embodiments shall not limit the scope of the present invention defined in the claims.

## Claims

1. A strap-tensioning apparatus (30) including:
a base (40) including two walls (41) each formed with a first arched edge (46) and a second arched edge (47);
a short strap (31) connected to the base (40);
a reel (60) supported on the base (40);
a long strap (32) wound around the reel (60);
a coil spring (36) for causing the reel (60) to reel in the long strap (32);
a spring-loaded detent (42) movably supported on the walls (41) for engagement with the reel (60);
a handle (50) supported on the base (40), wherein the handle (50) includes two cams (52) formed thereon and an opening (51) defined therein, wherein each of the cams (52) includes a lobe (54) for pushing the spring-loaded detent (42) from the reel (60); and
a spring-loaded detent/suppressor (53) movably supported on the handle (50) for engagement with the reel (60);
wherein the handle (50) is pivotable to and fro to spin the reel (60) to reel in the long strap (32) when the detent/suppressor (53) is supported on the second arched edges (47) of the walls (41);
wherein the detent/suppressor (53) can be pushed via the opening (51) and disengaged from the reel (60) when it is located in a second position
on the first arched edges (46) of the walls (41)
**characterized in that**
the detent/suppressor (53) is configured to suppress the reel (60), when it is retained in a first position on the first arched edges (46) of the walls (41), wherein the spring-loaded detent (42) is in contact with the reel (60) when the detent/suppressor (53) is in the first position, but allows the reel (60) to spin when it is moved on the first arched edges (46) of the walls (41) from the first position to the second position, wherein the spring-loaded detent (42) is removed from the reel (60) when the detent/suppressor (53) is in the second position, in the case that the coil spring (36) is loaded by reeling out the long strap so that it causes an angular momentum to the reel (60) which overcomes a resistance of the detent/suppressor (53).

2. The strap-tensioning apparatus (30) according to claim 1, wherein each of the walls (41) includes a boss (44) formed thereon between the first and second arched edges (46, 47), wherein the detent/suppressor (53) includes a head (56) for engagement with the ratcheted wheels and a tail (57) extending from the head (56), wherein the tail (57) can be pushed through the opening (51) so that the head (56) can be lifted and moved over the bosses (44).

3. The strap-tensioning apparatus (30) according to claim 2, wherein each of the walls (41) includes a stop (45) formed thereon so that the second arched edge (47) is located between the stop (45) and the boss (44).

4. The strap-tensioning apparatus (30) according to claim 1, wherein the spring-loaded reel (60) includes:
two ratcheted wheels (62) for engagement with the detent (42) and the detent/suppressor (53); and
a tube (61) formed between the ratcheted wheels (62), wherein the long strap (32) is wound on the tube (61).

5. The strap-tensioning apparatus (30) according to claim 4, further including an axle (35) supported on the base (40) and inserted through the reel (60), wherein the long strap (32) is inserted through the reel (60) and tied to the axle (35).

6. The strap-tensioning apparatus (35) according to claim 4, wherein the detent/suppressor (53) includes:
a head (56) for engagement with the ratcheted wheels (62); and
a tail (57) extending from the head (56) and accessible through the opening (51).

7. The strap-tensioning apparatus (30) according to claim 6, wherein the detent/suppressor (53) includes two ribs (58) for engagement with the ratcheted wheels (62).

8. The strap-tensioning apparatus (30) according to claim 1, wherein each of the cams (52) includes a stop (55) formed thereon next to the lobe (54) so that the stop (55) is in contact with a side of the detent (42) when the lobe (54) is in contact with an end of the detent (42).

## Patentansprüche

1. Bandspannvorrichtung (30) mit:
einer Basis (40), die zwei Wände (41) umfasst, von denen jede mit einem ersten bogenförmigen Rand (46) und einem zweiten bogenförmigen Rand (47) ausgebildet ist,
einem kurzen Band (31), das mit der Basis (40) verbunden ist,
einer Spule (60), die an der Basis (40) gelagert ist,
einem langen Band (32), das um die Spule (60) gewickelt ist,
einer Spiralfeder (36), die ein Aufwickeln des langen Bandes (32) auf der Spule (60) bewirken kann,
einem federbelasteten Sperrstück (42), das zum Eingriff mit der Spule (60) beweglich an den Wänden (41) gelagert ist,
einem Griff (50), der an der Basis (40) gelagert ist, wobei der Griff (50) zwei daran ausgebildete Mitnehmer (52) und eine darin ausgebildete Öffnung (51) aufweist, wobei jeder der Mitnehmer (52) einen Nocken (54) umfasst, um das federbelastete Sperrstück (42) von der Spule (60) zu schieben, und mit
einem federbelasteten Sperrstück/Sperrgerät (53), das zum Eingriff mit der Spule (60) beweglich an dem Griff (50) gelagert ist,
wobei der Griff (50) hin und her schwenkbar ist, um die Spule (60) zum Aufwickeln des langen Bandes (32) zu drehen, wenn das Sperrstück/Sperrgerät (53) an den zweiten bogenförmigen Randn (47) der Wände (41) abgestützt ist,
wobei das Sperrstück/Sperrgerät (53) durch die Öffnung (51) gedrückt und von der Spule (60) gelöst werden kann, wenn es sich in einer zweiten Position an dem ersten bogenförmige Rand (46) der Wände (41) befindet,
**dadurch gekennzeichnet, dass**
das Sperrstück/Sperrgerät (53) derart konfiguriert ist, um die Spule (60) zu hemmen, wenn es in einer ersten Position an dem ersten bogenförmigen Rand (46) der Wände (41) gehalten wird, wobei das federbelastete Sperrstück (42) mit der Spule (60) in Kontakt steht, wenn sich das Sperrstück/Sperrgerät (53) in der ersten Position befindet, aber erlaubt, dass sich die Spule (60) dreht, wenn es an dem ersten bogenförmigen Rand (46) der Wände (41) von der ersten Position zur zweiten Position bewegt wird, wobei das federbelastete Sperrstück (42) von der Spule (60) gelöst ist, wenn sich das Sperrstück/Sperrgerät (53) in der zweiten Position befindet, wobei im Falle, dass die Spiralfeder (36) durch Abrollen des langen Bandes vorgespannt ist, diese einen Drehimpuls an der Spule (60) herbeiführt, welcher einen Widerstand des Sperrstücks/Sperrgeräts (53) überwindet.

2. Bandspannvorrichtung (30) nach Anspruch 1, bei welcher jede der Wände (41) einen daran ausgebildeten Buckel (44) zwischen dem ersten und dem zweiten bogenförmigen Rand (46, 47) aufweist, wobei das Sperrstück/Sperrgerät (53) ein Kopfende (56) zum Eingriff mit den Klinkenrädern und ein sich von dem Kopfende (56) erstreckendes Fußende (57) aufweist, wobei das Fußende (57) durch die Öffnung (51) gedrückt werden kann, sodass das Kopfende (56) angehoben und über die Buckel (44) bewegt werden kann.

3. Bandspannvorrichtung (30) nach Anspruch 2, bei welcher jede der Wände (41) einen daran ausgebildeten Anschlag (45) umfasst, wobei sich der zweite bogenförmige Rand (47) zwischen dem Anschlag (45) und dem Buckel (44) befindet.

4. Bandspannvorrichtung (30) nach Anspruch 1, bei welcher die federbelastete Spule (60):
zwei Klinkenräder (62) zum Eingriff mit dem Sperrstück (42) und dem Sperrstück/Sperrgerät (53), und
ein Rohr (61) umfasst, das zwischen den Klinkenrädern (62) ausgebildet ist, wobei das lange Band (32) auf dem Rohr (61) aufgewickelt ist.

5. Bandspannvorrichtung (30) nach Anspruch 4, welche ferner eine Achse (35) umfasst, die an der Basis (40) gelagert ist und durch die Spule (60) hindurchgesteckt ist, wobei das lange Band (32) durch die Spule (60) hindurchgeführt und an der Achse (35) fixiert ist.

6. Bandspannvorrichtung (35) nach Anspruch 4, bei welcher das Sperrstück/Sperrgerät (53)
ein Kopfende (56) zum Eingriff mit den Klinkenrädern (62), und
ein Fußende (57) aufweist, das sich von dem Kopfende (56) erstreckt und durch die Öffnung (51) zugänglich ist.

7. Bandspannvorrichtung (30) nach Anspruch 6, bei welcher das Sperrstück/Sperrgerät (53) zwei Rippen (58) zum Eingriff mit den Klinkenrädern (62) aufweist.

8. Bandspannvorrichtung (30) nach Anspruch 1, bei welcher jeder der Mitnehmer (52) einen daran ausgebildeten Anschlag (55) neben dem Nocken (54) umfasst, sodass der Anschlag (55) mit einer Seite des Sperrstücks (42) in Kontakt steht, wenn der Nocken (54) mit einem Ende des Sperrstücks (42) in Kontakt steht.

## Revendications

1. Appareil de serrage de sangle (30) qui comprend :
une base (40) qui comprend deux parois (41), chacune étant formée avec un premier bord arqué (46) et un second bord arqué (47),
une sangle courte (31) reliée à la base (40),
un touret (60) supporté sur la base (40),
une sangle longue (32) enroulée autour du touret (60),
un ressort en spirale (36) pour faire en sorte que le touret (60) enroule la sangle longue (32),
un cran chargé par ressort (42) supporté de manière mobile sur les parois (41) pour se mettre en prise avec le touret (60),
une poignée (50) supportée sur la base (40), la poignée (50) comprenant deux cames (52) formées dessus et une ouverture (51) qui y est définie, chacune des cames (52) comprenant un lobe (54) pour pousser le cran chargé par ressort (42) à partir du touret (60) et
un cran chargé par ressort/suppresseur (53) supporté de manière mobile sur la poignée (50) pour se mettre en prise avec le touret (60),
la poignée (50) étant pivotante en va-et-vient pour faire tourner le touret (60) pour enrouler la sangle longue (32) lorsque le cran/suppresseur (53) est supporté sur les seconds bords arqués (47) des parois (41),
le cran/suppresseur (53) pouvant être poussé par l'ouverture (51) et dégagé du touret (60) lorsqu'il est situé dans une seconde position sur les premiers bords arqués (46) des parois (41),
**caractérisé en ce que** le cran/suppresseur (53) est configuré pour supprimer le touret (60) lorsqu'il est retenu dans une première position sur les premiers bords arqués (46) des parois (41), le cran chargé par ressort (42) étant en contact avec le touret (60) lorsque la cran/suppresseur (53) est dans la première position mais permet au touret (60) de tourner lorsqu'il est déplacé sur les premiers bords arqués (46) des parois (41) de la première position à la seconde position, le cran chargé par ressort (42) étant enlevé du touret (60) lorsque le cran/suppresseur (53) est dans la seconde position, au cas où le ressort en spirale (36) est chargé en déroulant la sangle longue de manière à provoquer un moment angulaire pour le touret (60) qui surmonte une résistance du cran/suppresseur (53).

2. Appareil de serrage de sangle (30) selon la revendication 1, chacune des parois (41) comprenant une bosse (44) formée dessus entre le premier et le second bord arqué (46, 47), le cran/suppresseur (53) comprenant une tête (56) pour se mettre en prise avec les roues à cliquet et une queue (57) qui s'étend à partir de la tête (56), la queue (57) pouvant être poussée à travers l'ouverture (51) si bien que la tête (56) peut être soulevée et déplacée sur les bosses (44).

3. Appareil de serrage de sangle (30) selon la revendication 2, chacune des parois (41) comprenant un arrêt (45) formé dessus si bien que le second bord arqué (47) est situé entre l'arrêt (45) et la bosse (44).

4. Appareil de serrage de sangle (30) selon la revendication 1, le touret chargé par ressort (60) comprenant :
deux roues à cliquet (62) pour se mettre en prise avec le cran (42) et le cran/suppresseur (53) et
un tube (61) formé entre les roues à cliquet (62), la sangle longue (32) étant enroulée sur le tube (61).

5. Appareil de serrage de sangle (30) selon la revendication 4 comprenant de plus un axe (35) supporté sur la base (40) et inséré à travers le touret (60), la sangle longue (32) étant insérée à travers le touret (60) et serrée à l'axe (35).

6. Appareil de serrage de sangle (30) selon la revendication 4, le cran/suppresseur (53) comprenant : une tête (56) pour se mettre en prise avec les roues à cliquet (62) et une queue (57) qui s'étend à partir de la tête (56) et accessible à travers l'ouverture (51).

7. Appareil de serrage de sangle (30) selon la revendication 6, le cran/suppresseur (53) comprenant deux nervures (58) pour se mettre en prise avec les roues à cliquet (62).

8. Appareil de serrage de sangle (30) selon la revendication 1, chacune des cames (52) comprenant un arrêt (55) formé dessus près du lobe (54) si bien que l'arrêt (55) est en contact avec un côté du cran (42) lorsque le lobe (54) est en contact avec une extrémité du cran (42).
